# EUROPÄISCHE PATENTANMELDUNG

(11) **EP 2 418 581 A1**
(43) Veröffentlichungstag der Anmeldung: **15.02.2012**
(21) Anmeldenummer: 10172278.3
(22) Anmeldetag: 09.08.2010
(51) Int. Cl.: G06F 11/30, G06F 11/36

(54) **Verfahren und Analyseeinrichtung zum Auffinden von Fehlern in einem ablaufenden Programm**

(71) Anmelder: Siemens Aktiengesellschaft, 80333 München (DE)
(72) Erfinder: Zeh, Alexander, 91717, Wassertrüdingen (DE); Opaterny, Thilo, 90453, Nürnberg (DE)

(57) **Zusammenfassung**

Die Erfindung betrifft ein Verfahren und eine Analyseeinrichtung (DB) zum Auffinden von Fehlern in einem auf einer Zielplattform (ZP) ablaufenden Programm, wobei der Ablauf des Programms bei Auftreten eines Ereignisses unterbrochen wird, und wobei zumindest ein Teil der dabei vorliegenden Zustände der Zielplattform (ZP) und/oder des Programms als Zustandsinformationen erfasst und an eine Analyseeinrichtung (DB) übertragen werden. Dabei wird der der Ablauf des Programms unmittelbar nach der Übertragung der Zustandsinformationen fortgesetzt, und die Analyseeinrichtung (DB) umfasst eine Simulationsumgebung (SU) zum Ablauf einer Kopie des Programms, wobei mittels der übertragenen Zustandsinformationen die Kopie des Programms in den Zustand des unterbrochenen Programms zum Zeitpunkt der Unterbrechung versetzt wird. Durch ein solches Verfahren und durch eine solche Analyseeinrichtung lassen sich auch Programme im Produktivbetrieb bei zeitkritischen Prozessen und Anwendungen untersuchen ("Debuggen"), ohne dass für eine Einzelschrittausführung und andere Untersuchungsmethoden die produktive Programmausführung in erheblicher Weise unterbrochen werden muss.

## Beschreibung

Die Erfindung betrifft ein Verfahren zum Auffinden von Fehlern in einem ablaufenden Programm gemäß dem Oberbegriff des Patentanspruchs 1, und eine Analyseeinrichtung gemäß dem Oberbegriff des Patentanspruchs 8.

Programme für Computer und andere datentechnische Geräte und Anlagen werden in der Regel in einer Programmiersprache (Hochsprache) erstellt und danach mittels eines Compilers oder eines Interpreters in ein ablauffähiges Programm (Maschinencode, Object-Code o.ä.) übersetzt. Während die in der Hochsprache verfassten Computerprogramme durch ein verwendetes Entwicklungssystem bereits während oder nach dem Schreiben recht gut hinsichtlich syntaktischer Fehler untersucht werden können, treten strukturelle oder logische Unzulänglichkeiten und Fehler oft erst während eines Programmablaufs zu Tage.

Zur Fehlersuche stehen in den gebräuchlichen Entwicklungsumgebungen verschiedene Mittel zur Verfügung. Diese sind häufig unter dem Sammelbegriff "Debugger" bekannt. Im Folgenden werden solche "Debugger" betrachtet, die zur Laufzeit eines zu untersuchenden Programms Analysen erstellen und Ereignisse transparent machen. Bekannte Hilfsmittel sind dabei Beobachtungstabellen ("Watch Table"), Haltepunkte ("Break Points") und Einzelschrittausführung ("Single Step"), Programmaufzeichnungen ("Tracing") sowie Aufzeichnungsstatistiken ("Profiling").

Haltepunkte ("Break Points") unterbrechen den Programmablauf. Sie gehören allgemein zu den "Überprüfungspunkten". Dabei ergibt sich einem Anwender die Möglichkeit, mittels der Beobachtungstabellen die Werte von Variablen an einer bestimmten Stelle (Code-Adresse, Programm-Adresse) im Programm zu untersuchen, nämlich an der Stelle des Haltepunktes. In diesem Zusammenhang ermöglicht die Einzelschrittausführung ("Single Step") dem Anwender von diesem gegebenen Haltepunkt aus eine Weiterführung des Programms Schritt-für-Schritt.

Alle diese Werkzeuge verwenden als Auslöser sog. Ereignisse ("Trigger"), die eine Auslösebedingung ("Trigger Condition") definieren, die bestimmt, wann bzw. in welchem Fall eine Aktion durchzuführen ist, und wann nicht. Der Auslöser eines Haltepunktes ist das Erreichen einer bestimmten Instruktion, also beispielsweise eines Programmbefehls oder "Statements". Ein Anwender hat gemeinhin die Möglichkeit, Ereignisse und damit Auslösebedingungen zu definieren, die erfüllt sein müssen, um den Programmablauf zu unterbrechen und eine Analyse o.ä. auszulösen. Bei den gebräuchlichen "Debuggern" wird daher an einer interessierenden Stelle des zu überprüfenden Programms ein Überprüfungspunkt, z.B. Haltepunkt ("Break Point"), eingesetzt, der dafür sorgt, dass bei Erreichen dieser Stelle im Programmablauf ein sog. "Interrupt" ausgelöst wird. Dieser "Interrupt" sorgt dafür, dass das Programm angehalten wird und eine Meldung an den "Debugger" versendet wird. Danach bleibt der Programmablauf so lange unterbrochen, bis vorgesehene Maßnahmen zur Analyse etc. beendet sind.

In dem Stadium, in dem der Programmablauf unterbrochen ist, bieten sich einem Benutzer vielfältige Möglichkeiten zur Analyse des Programms beziehungsweise des Problems. So ist es beispielsweise möglich, ausgehend von der Stelle, an der der Programmablauf unterbrochen wurde, in einer Einzelschrittausführung vorwärts und oft auch rückwärts die Programmausführung fortzusetzen; man spricht auch vom "steppen"(von englisch "Step" = Schritt) durch den "Code".

Während diese Maßnahmen zur Analyse während der Erstellung eines Programms üblich und bewährt sind, gibt es viele Fehler, die erst zur Laufzeit eines Programms im Realbetrieb auftreten, beispielsweise infolge von nicht vorhergesehenen Zuständen und Zustandskombinationen von peripheren Komponenten, also beispielsweise in Abhängigkeit von Messwerten von Sensoren, Schaltern (sog. "I/O"-Komponenten) etc.. Auch in diesen Fällen kann zwar die Programmausführung ereignisgesteuert angehalten werden, was jedoch dazu führt, dass die gesteuerte Anlage oder der gesteuerte Prozess ebenfalls unterbrochen wird. Dies ist jedoch in vielen Fällen unerwünscht beziehungsweise unmöglich, so dass insbesondere bei so genannten "Echtzeitanwendungen" keine oder nur geringe Unterbrechungen des Produktivbetriebs toleriert werden können. In diesen Fällen ist es zwar möglich, eine Augenblicksdarstellung ("Snapshot") einiger oder aller Variablen und anderer Zustände für eine spätere Analyse zu speichern, aber auf andere gebräuchliche Funktionen wie Einzelschrittausführung etc. muss bei solchen Anwendungen verzichtet werden.

Es ist daher eine Aufgabe der vorliegenden Erfindung, insbesondere bei zeitkritischen Anwendungen die Fehlersuche von Programmen in industriellen Automatisierungskomponenten im Realbetrieb zu verbessern.

Es ist ein zentraler erfindungsgemäßer Gedanke der Lösung der Aufgabe, dass das zu untersuchende beziehungsweise von Fehlern zu befreiende Programm als Kopie in einer Simulationsumgebung mit genauen denjenigen Variableninhalten, Registerinhalten, Eingangswerten etc. (kurz: Zuständen) fortgesetzt beziehungsweise untersucht werden kann, während das Programm der Zielplattform beziehungsweise der industriellen Automatisierungskomponente "im Produktivbetrieb" fortgesetzt werden kann.

Die Aufgabe wird insbesondere mit einem Verfahren gemäß dem Patentanspruch 1 gelöst. Dabei ist ein Verfahren zum Auffinden von Fehlern in einem auf einer Zielplattform ablaufenden Programm vorgesehen, wobei der Ablauf des Programms bei Auftreten eines Ereignisses unterbrochen wird, und wobei zumindest ein Teil der dabei vorliegenden Zustände der Zielplattform und/oder des Programms als Zustandsinformationen erfasst und an eine Analyseeinrichtung übertragen werden. Dabei wird der Ablauf des Programms unmittelbar nach der Übertragung der Zustandsinformationen fortgesetzt, und die Analyseeinrichtung umfasst eine Simulationsumgebung zum Ablauf einer Kopie des Programms, wobei mittels der übertragenen Zustandsinformationen die Kopie des Programms in den Zustand des unterbrochenen Programms zum Zeitpunkt der Unterbrechung versetzt wird. Dadurch ist es möglich, Breakpoints und andere ereignisgesteuerte Unterbrechungen auch auf solchen Zielplattformen ("PLC", "Controller" o.ä.) zu verwenden, die der Kontrolle von zeitkritischen Prozessen dienen. Dabei wird ein laufender Prozess gar nicht oder nur unerheblich gestört, wobei dennoch ein einfaches nachvollziehen des Programmverhaltens möglich ist und somit umfangreiche "Debugging-Möglichkeiten" gegeben sind.

Die Aufgabe wird außerdem durch eine Analyseeinrichtung gemäß dem Patentanspruch 8 gelöst, wobei Analyseeinrichtung zum Auffinden von Fehlern in einem auf einer Zielplattform ablaufenden Programm vorgeschlagen wird, wobei die Analyseeinrichtung zur Verarbeitung von Zustandsinformationen des aufgrund eines Ereignisses unterbrochenen Programms eingerichtet ist. Dabei umfasst die Analyseeinrichtung eine Simulationsumgebung zum Ablauf einer Kopie des unterbrochenen Programms, wobei die bei der Unterbrechung des zu untersuchenden Programms erfassten Zustandsinformationen zur Konfigurierung und zum Ablauf der Kopie des Programms in der Simulationsumgebung verwendbar sind. Mit einer solchen Analyseeinrichtung lassen sich die Vorteile des erfindungsgemäßen Verfahrens realisieren.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für die erfindungsgemäße Analyseeinrichtung.

Vorteilhaft lassen sich als das Ereignis das Erreichen eines Unterbrechungspunktes durch die Programmausführung oder das Eintreten einer vorab definierten Bedingung definieren. So können beispielsweise Variablen, Eingänge, Register und andere Parameter hinsichtlich des Auftretens bestimmter Werte oder hinsichtlich des Auftretens von Änderungen überwachen und somit als "Trigger" für das temporäre Anhalten des Programms und die Übertragung von Zustandsinformationen an die Analyseeinrichtung beziehungsweise an die Simulationsumgebung nutzen.

In einer vorteilhaften Ausgestaltung sind die Zustandsinformationen für spätere Analysen oder für spätere Simulationen speicherbar.

Vorteilhaft ist wie mit den Zustandsinformationen versehene ("konfigurierte") Kopie des Programms in der Simulationsumgebung in Einzelschritten ausführbar.

Neben den Inhalten von einigen oder allen Variablen und Registern werden vorteilhaft als Zustandsinformationen auch Daten und Zustände von peripheren Komponenten der Zielplattform, insbesondere Eingangswerte von Schaltern und Sensoren, erfasst und übertragen. In einer weiteren vorteilhaften Ausgestaltung wird automatisch analysiert, welche Variablen, Zustände etc. im vorliegenden Durchlauf (Zyklus) des Programms verwendet werden, so dass sich die Erfassung und die Übertragung im Wesentlichen auf diese Zustandsinformationen beschränken kann und somit der Programmablauf nicht länger als notwendig unterbrochen werden muss. Dabei kann es zu weiter von Vorteil sein, dass nach der Fortsetzung des unterbrochenen Programms weiterhin oder zumindest im betroffenen Zyklus des Programms Daten und Zustände von peripheren Komponenten bzw. deren Änderungen erfasst und als Zustandsinformationen zu der Simulationsumgebung übertragen werden, so dass diese auch für den Ablauf der Kopie des Programms in der Simulationsumgebung zur Verfügung stehen. Es kann weiterhin von Vorteil sein, beispielsweise in einem Ringsspeicher fortlaufend Zustände von peripheren Komponenten, Eingangssignalen etc. vorzuhalten, so dass auch solche Zustandsänderungen, die vor einer Unterbrechung des Programms aufgetreten sind, bei der Simulation berücksichtigt werden können. Dies betrifft insbesondere das so genannte "Rückwärts-steppen" durch das simulierte Programm.

Ein Ausführungsbeispiel des erfindungsgemäßen Verfahrens wird nachfolgend anhand der Zeichnungen erläutert. Das Ausführungsbeispiel dient gleichzeitig der Erläuterung einer erfindungsgemäßen Analyseeinrichtung.

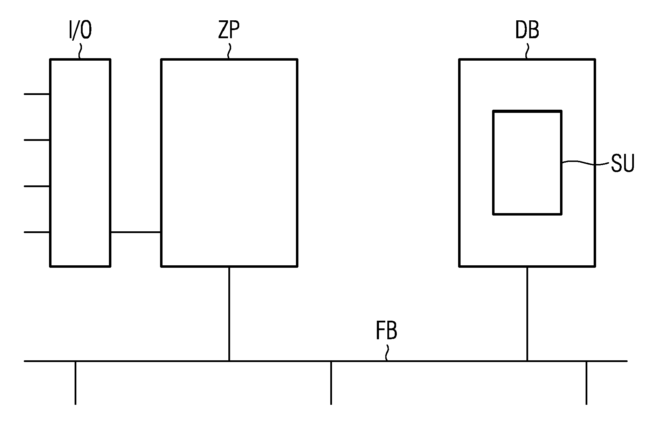

Dabei zeigt die einzige Figur in schematischer Darstellung einer Anordnung aus einer Automatisierungskomponente und einer Analyseeinrichtung, die an einem Datennetzwerk angeschlossen sind.

In der Figur ist schematisch eine industrielle Automatisierungsanordnung bzw. ein Teil einer solchen dargestellt, wobei an einem Datennetzwerk FB ("Feldbus") eine Zielplattform ZP angebunden ist. Die Zielplattform ZP ist hier ein für Automatisierungssysteme üblicher Controller, eine sog. PLC ("Programmable Logic Controller"). Über einen Rückwandbus ist die Zielplattform ZP mit einer Ein-/Ausgabebaugruppe I/O ("Input/Output") als ein einfaches Beispiel für eine periphere Komponente verbunden, wobei die Eingangssignale dieser peripheren Komponente durch ein Programm oder einen Prozess der Zielplattform ZP auslesbar sind, und wobei analog dazu Ausgänge dieser Baugruppe durch ein Programm oder einen Prozess der Zielplattform ZP beeinflussbar ("setzen"; "löschen") sind.

An dem Datennetzwerk FB ist weiterhin die Analyseeinrichtung DB ("Debugger") angeknüpft, wobei es sich im vorliegenden Ausführungsbeispiel um ein Entwicklungssystem ("Engineering-System") handelt, welches neben einem gebräuchlichen Software-"Debugger", der der Fehlerbeseitigung eines Programms auf der Zielplattform ZP dient, weiterhin eine Simulationsumgebung SU umfasst, welche derart ausgestaltet ist, dass damit Programme, also ausführbarer Code oder diesem zugrunde liegender Source-Code, der für die Zielplattform ZP bestimmt ist, ausgeführt werden können. Dabei ist die Debugging-Einrichtung der Analyseeinrichtung DB derart aufgebaut, dass nicht nur die Prozesse und Programme der Zielplattform ZP, sondern wahlweise auch die in der Simulationsumgebung SU ablaufenden Programme und Prozesse kontrolliert, gesteuert und letztlich von Fehlern bereinigt werden können. Weiterhin ist die Simulationsumgebung SU in einer besonderen Ausführungsform derart eingerichtet, dass die Ein-/Ausgabebaugruppe I/O simuliert werden kann, wobei deren Zustände anhand von Daten simuliert werden, die bei einem realen Programmablauf auf der Zielplattform ZP ermittelt wurden.

Zur Fehlersuche eines Programms, welches im Produktivbetrieb auf der Zielplattform ZP abläuft, können in dem Programmcode sog. "Offline-Breakpoints" gesetzt werden. Sobald ein solcher Punkt bei der Programmausführung erreicht wird, ist das ein Ereignis, welches dazu führt, dass der aktuelle Anlagenzustand, also die dabei vorliegenden Zustände der Zielplattform ZP und insbesondere des ablaufenden Programms als Zustandsinformationen an die Analyseeinrichtung DB übertragen und dort zur Konfigurierung der Simulationsumgebung SU verwendet werden. Zur Speicherung bzw. Zwischen-Speicherung der Zustandsinformationen ist ggf. ein kurzer Halt des ablaufenden Programms notwendig, wobei jedoch schnellstmöglich die Programmausführung fortgesetzt wird. In einer alternativen Ausführungsform ist die Hardware und die Software bzw. Firmware der Zielplattform ZP derart organisiert, dass die Zustandsinformationen während des laufenden Betriebs ermittelt und übertragen werden können.

Nach der Konfiguration der Simulationseinrichtung SU, auf der eine exakte Kopie des zu untersuchenden Programms oder des diesem Programm zugrundeliegenden Source-Codes (Quelltexte) "installiert" ist, kann unabhängig vom Programmablauf auf der Zielplattform ZP, also "offline", durch die einzelnen Befehle und Netzwerke "gesteppt" werden, ohne den aktuellen, produktiven Prozess weiter zu beeinflussen.

In einer Ausgestaltung der Erfindung können weitere Ereignisse, Daten und Zustandsänderungen, z.B. an den Eingängen der peripheren Komponenten, beispielsweise bis zum Ende des aktuellen Zyklus' ebenfalls aufgezeichnet und der Simulationsumgebung SU für den dort simulierten weiteren Programmablauf zur Verfügung gestellt werden. Dabei sind Zustände und Zustandsänderungen der peripheren Komponente bezogen auf das zu untersuchende Programm befehlsgranular speicherbar und simulierbar; alternativ kann eine Speicherung und somit Simulation der peripheren Komponente auch in einem festgelegten Zeitraster wiederholt erfolgen. Dadurch ist es möglich, auch nachträgliche Änderungen solcher Zustände bei der Simulation zu berücksichtigen und damit einen vollständigen Zyklus nachzuvollziehen.

Als Ereignis, welches die Ermittlung und Übertragung der Zustandsinformationen auslöst, sind nicht nur die genannten "Offline-Breakpoints" nutzbar, sondern zahlreiche bereits aus dem Stand der Technik bekannte Verfahren zur Unterbrechung eines Programms, beispielsweise eine sog. "Pausetaste", sog. "Watch Points" auf Variablen und Registern usw..

Die Zustandsinformationen und somit der erfasste Anlagenzustand kann vorteilhaft für eine spätere Analyse in Form eines sog. "Snapshots" für ein erneutes "Debuggen", für eine erneute Simulation oder für weitere Analysen gespeichert werden.

Im vorliegenden Ausführungsbeispiel ist eine Programmroutine, die die Ermittlung der Zustandsinformationen und die Übertragung dieser an die Analyseeinrichtung vornimmt, Bestandteil einer Firmware der Zielplattform ZP. In einer alternativen Ausführungsform kann diese Funktionalität aber auch seitens der Analyseeinrichtung DB vorgesehen sein. Dies betrifft insbesondere diejenigen Fälle, in denen als Übertragungsmedium nicht ein Datennetzwerk FB verwendet wird, sondern ein Direktzugriff der Analyseeinrichtung DB auf eine Prozessoreinrichtung der Zielplattform ZP, beispielsweise nach Art eines JTAG-Interfaces (JTAG = Joint Test Action Group / IEEE-Standard 1149.1).

Alternativ zu der gezeigten Anordnung können der verwendete Debugger und die Simulationsumgebung SU auch auf getrennten Maschinen installiert sein; ebenso können für das "direkte" (online) "Debuggen" des Codes auf der Zielplattform ZP und für das "Debuggen" des Codes in der Simulationsumgebung SU ("offline-debuggen") auch getrennte "Debugger" verwendet werden.

## Patentansprüche

1. Verfahren zum Auffinden von Fehlern in einem auf einer Zielplattform (ZP) ablaufenden Programm,
wobei der Ablauf des Programms bei Auftreten eines Ereignisses unterbrochen wird, und
wobei zumindest ein Teil der dabei vorliegenden Zustände der Zielplattform (ZP) und/oder des Programms als Zustandsinformationen erfasst und an eine Analyseeinrichtung (DB) übertragen werden,
**dadurch gekennzeichnet,**
**dass** der Ablauf des Programms unmittelbar nach der Übertragung der Zustandsinformationen fortgesetzt wird, und
**dass** die Analyseeinrichtung (DB) eine Simulationsumgebung (SU) zum Ablauf einer Kopie des Programms umfasst, wobei mittels der übertragenen Zustandsinformationen die Kopie des Programms in den Zustand des unterbrochenen Programms zum Zeitpunkt der Unterbrechung versetzt wird.

2. Verfahren nach Patentanspruch 1,
**dadurch gekennzeichnet,**
**dass** als das Ereignis das Erreichen eines Unterbrechungspunkts durch die Programmausführung, das Auftreten eines vordefinierten Wertes oder einer vordefinierten Änderung eines Variablen-Inhaltes oder das Auftreten eines Software-Interrupts oder das Auftreten eines Hardware-Interrupts auswählbar ist.

3. Verfahren nach einem der vorhergehenden Patentansprüche,
**dadurch gekennzeichnet,**
**dass** die Zustandsinformationen für spätere Analysen oder für spätere Simulationen speicherbar sind.

4. Verfahren nach einem der vorhergehenden Patentansprüche,
**dadurch gekennzeichnet,**
**dass** die mit den Zustandsinformationen versehene Kopie des Programms in der Simulationsumgebung (SU) in Einzelschritten ausgeführt wird.

5. Verfahren nach einem der vorhergehenden Patentansprüche,
**dadurch gekennzeichnet,**
**dass** als die Zustandsinformationen auch Daten und Zustände von peripheren Komponenten (I/O) der Zielplattform (ZP) erfasst und übertragen werden.

6. Verfahren nach Patentanspruch 5,
**dadurch gekennzeichnet,**
**dass** nach der Fortsetzung des unterbrochenen Programms weiterhin Daten und Zustände von peripheren Komponenten (I/O) oder Änderungen der Daten und Zustände der peripheren Komponenten (I/O) auf der Zielplattform (ZP) erfasst und als Zustandsinformationen zu der Simulationsumgebung (SU) übertragen und dort für die Ausführung der Kopie des Programms verwendet werden.

7. Verfahren nach einem der vorhergehenden Patentansprüche,
**dadurch gekennzeichnet,**
**dass** als das Programm ein Automatisierungsprogramm und als die Zielplattform (ZP) eine industrielle Automatisierungskomponente verwendet wird.

8. Analyseeinrichtung (DB) zum Auffinden von Fehlern in einem auf einer Zielplattform (ZP) ablaufenden Programm, wobei
die Analyseeinrichtung (DB) zur Verarbeitung von Zustandsinformationen des aufgrund eines Ereignisses unterbrochenen Programms eingerichtet ist,
**dadurch gekennzeichnet,**
**dass** die Analyseeinrichtung (DB) eine Simulationsumgebung (SU) zum Ablauf einer Kopie des unterbrochenen Programms umfasst, wobei
die bei der Unterbrechung des zu untersuchenden Programms erfassten Zustandsinformationen zur Konfigurierung und zum Ablauf der Kopie des Programms in der Simulationsumgebung (SU) verwendbar sind.
